(19) Europäisches Patentamt

European Patent Office

Office européen des brevets

(11) **EP 0 792 851 B1**

(12) **EUROPÄISCHE PATENTSCHRIFT**

(45) Veröffentlichungstag und Bekanntmachung des Hinweises auf die Patenterteilung:
**04.10.2000 Patentblatt 2000/40**

(51) Int Cl.[7]: **C04B 35/043**, F27D 1/00

(21) Anmeldenummer: **97102131.6**

(22) Anmeldetag: **11.02.1997**

(54) **Verfahren zur Herstellung eines grobkeramischen Formkörpers auf der Basis von Magnesiumoxid und dessen Verwendung.**

Process of production of a coarse ceramic body based on magnesia and use thereof

Procédé pour la fabrication d'un pièce céramique grossières à base de magnésie calcinée, et son utilisation

(84) Benannte Vertragsstaaten:
**AT ES FR GB IT**

(30) Priorität: **29.02.1996 DE 19607605**

(43) Veröffentlichungstag der Anmeldung:
**03.09.1997 Patentblatt 1997/36**

(73) Patentinhaber: **Refratechnik GmbH
D-37079 Göttingen (DE)**

(72) Erfinder:
• **Bartha, Peter, Dr.
37120 Bovenden (DE)**
• **Weibel, Guido, Dipl.-Ing.
37127 Scheden (DE)**
• **Klischat, Hans-Jürgen, Dr.
37083 Göttingen (DE)**

(74) Vertreter: **Goddar, Heinz J., Dr.
FORRESTER & BOEHMERT
Franz-Joseph-Strasse 38
80801 München (DE)**

(56) Entgegenhaltungen:
**GB-A- 1 504 280        US-A- 4 849 383**

• **CHEMICAL ABSTRACTS, vol. 108, no. 2, 11.Januar 1988 Columbus, Ohio, US; abstract no. 10298r, V. RADONJIC: Seite 265; XP000016750 & EMAIJL-KERAM-STAKLO, Bd. 21, Nr. 3-4, - 1986 Seiten 36-54,**
• **A.N WAJDOVICZ: "", PROCEDINGS UNITECR 93 CONGRESS , (1993), SAO PAULO, BRAZIL, , Band , Nr. , Seiten 173 - 197**
• **H. KOZUKA, ET. AL.: "", PROCEDINGS UNITECR 95 CONGRESS (1995), KYOTO, JAPAN, , Band 1, Nr. , Seiten 256 - 263**
• **S. JIALIN, D.SHUJU: "", IBID (1995), , , Band 2, Nr. , Seiten 386 - 392**
• **: "", M.A. BILHAM, INTERNATIONAL CEMENT REVIEW, SEPTEMBER (1991), , , Band , Nr. , Seiten 40 - 41**
• **S.RADOVANOVIC: "", PROCEDINGS UNITECR 95 CONGRESS (1995), KYOTO, JAPAN, , Band 1, Nr. , Seiten 224 - 232**

Bemerkungen:
Die Akte enthält technische Angaben, die nach dem Eingang der Anmeldung eingereicht wurden und die nicht in dieser Patentschrift enthalten sind.

**Beschreibung**

Die Erfindung betrifft ein Verfahren zum Herstellen eines grobkeramischen, feuerfesten Formkörpers, insbesondere zur Ausmauerung von Drehrohröfen, auf der Basis von Magnesia, mit einem Gehalt der für die Herstellung des Formkörpers verwendeten Formkörpergesamtmischung (Versatz) an in der Kornfraktion > 0,3 mm vorliegenden Partikeln, die calciumzirkonatbildende Substanzen in einem molaren Verhältnis von CaO zu $ZrO_2$ von 1 aufweisen.

Aus der US-PS 48 49 383 ist ein grobkeramischer Formkörper der vorgenannten Art bekannt, bei dem die Partikel, welche die calciumzirkonatbildenden Substanzen enthalten, bereits vor der Zugabe zur Formkörpergesamtmischung unter Calciumzirkonatbildung gemäß Beispiel bei 1750°C zu einem Klinker gebrannt bzw. gesintert worden sind. Der Klinker wird dann zerkleinert und in dem gewünschten prozentualen Verhältnis in die Formkörpergesamtmischung eingebracht, aus welcher dann Feuerfeststeine geformt und anschließend gebrannt werden. Während des Brennprozesses verändert sich das innere Gefüge der Partikel wegen des vorangehenden Sinterprozesses praktisch nicht mehr, da im Inneren der Partikel und auch zwischen diesen und den umgebenden Bereichen des Feuerfeststeines praktisch keine Reaktionen mehr stattfinden.

Es hat sich gezeigt, daß der gattungsgemäße Feuerfeststein bei dichter Verlegung in Drehrohröfen Probleme (Abplatzungen etc.) hinsichtlich der auftretenden Spannungen im Ofenmantel, die auf die unvermeidbare Ovalität von Drehrohröfen, insbesondere Zementdrehrohröfen, zurückzuführen sind, mit sich bringt.

Aus der DE-PS 35 27 789 ist ein grobkeramischer Formkörper mit einem Gehalt an spinellbildenden Substanzen bekannt, die beim Brennen des Formkörpers zu einer Mikrorißbildung führen, wodurch sich eine gute Temperaturwechselbeständigkeit ergibt, jedoch nimmt hierbei die Kaltdruckfestigkeit während der Mikrorißbildung und der damit verbundenen Gefügeauflockerung, die nach dem Brennprozeß irreversibel im Feuerfeststein verbleibt, mit zunehmendem Gehalt an spinellbildenden Substanzen kontinuierlich ab. Ungeachtet dessen, daß sich dieser spinellhaltige Feuerfeststein in der Praxis durchaus bewährt hat, resultieren infolge der Abnahme der Kaltdruckfestigkeit beim Brennprozeß in manchen Anwendungsfällen ebenfalls Probleme hinsichtlich der Spannungswiderstandsfähigkeit.

Der Erfindung liegt die Aufgabe zugrunde, das gattungsgemäße Verfahren zum Herstellen eines Formkörper dahingehend weiterzubilden, daß sich eine verbesserte Spannungswiderstandsfähigkeit des Formkörpers ergibt.

Erfindungsgemäß wird diese Aufgabe dadurch gelöst, daß die einzelnen Partikel nach Mischung ihrer Gemengekomponenten in stöchiometrischem Verhältnis geformt und der für die Herstellung des Formkörpers verwendeten Formkörpergesamtmischung vor dem Brennprozeß als Gemengepartikel in nicht ausreagiertem Zustand zugesetzt sind; und daß der Gehalt der Gemengepartikel, bezogen auf die Formkörpergesamtmischung, 5 bis 25 Gew.-% beträgt; und

die Formkörpergesamtmischung nach der Erfindung vorzugsweise durch eine derartige Zusammensetzung gekennzeichnet ist, daß der nach der Formel

$$SEI = \sigma_{wd} + \sigma_w - KDF$$

ermittelte Spannungsempfindlichkeitsindex $SEI \leq 550$ N/mm$^2$ ist, wobei $\sigma_{wd}$ die Wärmedehnungsspannung in N/mm$^2$, $\sigma_w$ die zulässige Ovalitätsspannung in N/mm$^2$ und KDF die in N/mm$^2$ ausgedrückte Kaltdruckfestigkeit des Formkörpers bedeuten und $\sigma_{wd}$ bzw. $\sigma_w$ den nachstehenden Beziehungen genügen:

$$\sigma_{wd} \approx \frac{D_{max}}{100} \frac{T_o}{1450} \cdot E_d,$$

$$\sigma_w \approx K_{zul.} \cdot E_d,$$

wobei $E_d$ den dynamischen Elastizitätsmodul in N/mm$^2$, $D_{max}$ die maximale Ausdehnung eines zylindrischen Probekörpers beim Druckerweichungsversuch nach DIN 51053 Blatt 1 in Prozent, $T_o$ die Temperatur, bei der maximale Ausdehnung eines Probekörpers beim Druckerweichungsversuch auftritt, in °C und $K_{zul.}$ einen Zulässigkeitsfaktor bedeuten, der sich im Fall eines Drehrohrofens mit einem Radius von 2,25 m, einer Höhe des Formkörpers in Radiusrichtung ("Steinhöhe") von 250 mm und einer Ofenmantelovalität von 0,4 % zu 0,67·10$^{-3}$ errechnet.

Für andere übliche Ofendurchmesser, Steinhöhen und Ovalitäten ergeben sich nur wenig hiervon abweichende Werte.

Nach der Erfindung kann auch vorgesehen sein, daß die Gemengepartikel in der Kornfraktion von 0,3 bis 4,0 mm vorliegen.

Eine weitere Ausführungsform der Erfindung sieht vor, daß die Gemengepartikel in der Kornfraktion von 0,5 bis 2,0 mm vorliegen.

Der Formkörper nach dem Verfahren der Erfindung kann sich auch dadurch auszeichnen, daß der Gehalt der Formkörpergesamtmischung an den Gemengepartikeln bis zu 15 Gew.-%, ausgedrückt in $ZrO_2$, beträgt.

Eine weitere Ausführungsform des Formkörpers nach dem Verfahren der Erfindung ist dadurch gekennzeichnet, daß die Gemengepartikel wenigstens einen Calciumzirkonatbildner als Metalloxid, Metallhydroxid, Metallcarbonat und/oder Metallsalz aufweisen, der/die während des Brennprozesses Calciumzirkonat bildet/bilden.

Die Erfindung ist auch auf die Verwendung des grobkeramischen Formkörpers nach der Erfindung als Feuerfestmaterial, insbesondere zur Ausmauerung von Drehrohröfen, gerichtet.

Der Erfindung liegt die überraschende Erkenntnis zugrunde, daß es dadurch, daß die Gemengepartikel mit den calciumzirkonatbildenden Substanzen in unreagierter Form der Formkörpergesamtmischung vor dem Brennprozeß zugesetzt werden, gelingt, den Spannungsempfindlichkeitsindex deutlich zu reduzieren, so daß dieser ≤ 550 N/$mm^2$ ist. Dies gelingt unerwarteterweise dadurch, daß es offenbar anders als bei den Zusammensetzungen nach der DE-PS 35 27 789 bei den Gemengepartikeln nach der Erfindung zu keiner Gefügestörung kommt, charakterisiert durch eine überproportionale KDF-Senkung, sondern die KDF der typischen Gesetzmäßigkeit der offenen Porosität folgt. Dadurch, daß die Kaltdruckfestigkeit beim Brennprozeß im Gegensatz zu den Zusammensetzungen nach der DE-PS 35 27 789 stabilisiert wird, nimmt die Spannungsempfindlichkeit in erfindungswesentlicher Weise ab, wie sich aus der in Patentanspruch 2 angegebenen Formel ergibt.

Die erfindungsgemäß erzielte Herabsetzung des Spannungsempfindlichkeitsindex führt dazu, daß bei Verwendung von erfindungsgemäß hergestellten Formkörpern zum Ausmauern von Drehrohröfen die beim gattungsgemäßen Stand der Technik zu beobachtenden mechanisch bedingten Abplatzerscheinungen deutlich verringert werden. Hierdurch wird ein wesentliches Problem des Standes der Technik behoben, unter deutlicher Steigerung der Standzeit feuerfester Ausmauerungen dieser Art.

Weitere Merkmale und Vorteile der Erfindung ergeben sich aus der nachstehenden Beschreibung, in der ein Ausführungsbeispiel im einzelnen erläutert ist.

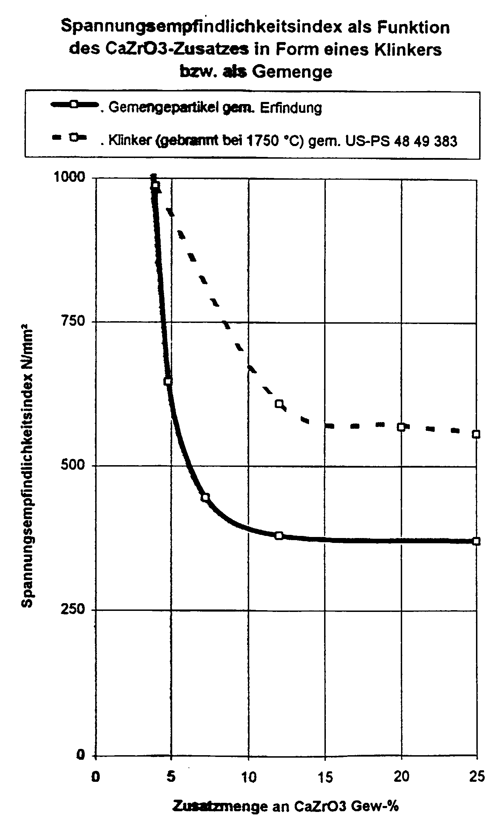

Dabei zeigt die aus einer einzigen Figur bestehende Zeichnung in diagrammartiger Darstellung den Spannungsempfindlichkeitsindex als Funktion des $CaZrO_3$-Zusatzes in Form eines Klinkers bzw. als Gemenge.

Beispiel

Zur Herstellung eines grobkeramischen Formkörpers wurde zunächst ein Grundversatz aus Sintermagnesia mit einem Maximalkorn von 4 mm und einer Kornverteilung gemäß Fuller-Kurve hergestellt. Diesem Grundversatz wurden Gemengepartikel in einem Anteil von 5 bis 25 Gew.-% mit einem mittleren Durchmesser von zwischen 0,5 und 2 mm, hergestellt durch Mischen und Kompaktieren von Zirkonoxid und Kreide in einem dem Calciumzirkonat entsprechenden stöchiometrischen Verhältnis entsprechend der nachstehenden Tabelle, beigemischt:

|  | Zirkonoxid [Gew.-%] | Kreide [Gew.-%] |
|---|---|---|
| $Al_2O_3$ | 0,1 | |
| CaO | 0,2 | > 98,0 (glühverlustfrei) |
| $SiO_2$ | 0,5 | |
| $Fe_2O_3$ | 0,5 | |
| $ZrO_2$ | 96,6 | |
| $HfO_2$ | 2,1 | |

Die Mischungen wurden mit der erforderlichen Menge an Ligninsulfonat versetzt, mit einem spezifischen Preßdruck von ≥ 120 MPa verpreßt, getrocknet und bei einer Sintertemperatur gebrannt, die oberhalb der Bildungstemperatur des Calciumzirkonats lag und in dem hier dargestellten Ausführungsbeispiel bei 1650°C lag.

Die erreichten physikalischen Eigenschaften hängen von der Zusatzmenge und der Kornfraktion der Gemengepartikel ab. Der Spannungsempfindlichkeitsindex (SEI) kann in weiten Grenzen variiert werden, wie aus der Zeichnung hervorgeht.

Im Vergleich zu konventionellen temperaturwechselbeständigen Steinsorten mit hoher Resistenz gegen Angriff calcium-silikatischer Verbindungen bedeutet dies eine drastische Reduzierung des SEI-Wertes.

Ein wesentlicher Vorteil der grobkeramischen Formkörper nach dem Verfahren der Erfindung besteht darin, daß neben einer signifikanten Minimierung der Spannungsempfindlichkeit keine chemischen Reaktionen mit anderen Komponenten des Steins, vornehmlich CaO-haltigen Komponenten, stattfinden können, da die Gemengepartikel beim Steinbrand bereits vollständig zu Calciumzirkonat ausreagiert sind. Andere Komponenten des Magnesiasinters, etwa CaO, werden durch die Gegenwart von $ZrO_2$ nicht beeinflußt, die Bildung niedrigschmelzender Verbindungen, wie Monticellit oder Merwinit, wird unterbunden.

Ähnliche Ergebnisse, wie sie vorstehend anhand des Beispiels beschrieben wurden, lassen sich auch mit Gemengepartikeln erzielen, die aus unstabilisiertem $ZrO_2$ und aus $ZrO_2$ mit verschiedenen Stabilisierungsgraden sowie einem CaO-Bildner hergestellt sind.

Nach dem erfindungsgemäßen Verfahren hergestellte Formkörper bzw. Feuerfeststeine lassen sich überall dort vorteilhaft einsetzen, wo starke thermomechanische Spannungen in Kombination mit thermo-chemischer Beanspruchung durch Schmelzphasen auftreten. Dies ist beispielsweise bei Sinter- und Übergangszonen von Drehrohröfen für die Herstellung von Zement, Kalk, Dolomit und Magnesit sowie Schmelz- und Behandlungsgefäßen der Eisen- und NE-Metallindustrie und bei der Stranggußkeramik der Fall.

Es sei noch angemerkt, daß die Angaben bezüglich des Gehaltes der Formkörpergesamtmischung an Gemengepartikeln sich bei Verwendung von Hydroxiden und/oder Salzen auf das entsprechende Massenäquivalent, bezogen auf Oxide, bezieht.

Die in der vorstehenden Beschreibung sowie in den Ansprüchen offenbarten Merkmale der Erfindung können sowohl einzeln als auch in beliebiger Kombination für die Verwirklichung der Erfindung in ihren verschiedenen Ausführungsformen wesentlich sein.

**Patentansprüche**

1. Verfahren zum Herstellen eines grobkeramischen, feuerfesten Formkörpers, insbesondere zur Ausmauerung von Drehrohröfen, auf der Basis von Magnesia, mit einem Gehalt der für die Herstellung des Formkörpers verwendeten Formkörpergesamtmischung (Versatz) an in der Komfraktion > 0,3 mm vorliegenden Partikeln, die calciumzirkonatbildende Substanzen in einem molaren Verhältnis von CaO zu $ZrO_2$ von 1 aufweisen, dadurch gekennzeichnet, daß

   die einzelnen Partikel nach Mischung ihrer Gemengekomponenten in stöchiometrischem Verhältnis geformt und der für die Herstellung des Formkörpers verwendeten Formkörpergesamtmischung vor dem Brennprozeß als Gemengepartikel in nicht ausreagiertem Zustand zugesetzt werden;
   der Gehalt der Gemengepartikel, bezogen auf die Formkörpergesamtmischung, von 5 bis 25 Gew.-% beträgt; und
   die Formkörpergesamtmischung derart eingestellt wird, daß der nach der Formel

   $$SEI = \sigma_{wd} + \sigma_w - KDF$$

   ermittelte Spannungsempfindlichkeitsindex $SEI \leq 550$ N/mm$^2$ ist, wobei $\sigma_{wd}$ die Wärmedehnungsspannung in N/mm$^2$, $\sigma_w$ die zulässige Ovalitätsspannung in N/mm$^2$ und KDF die in N/mm$^2$ ausgedrückte Kaltdruckfestigkeit des Formkörpers bedeuten und $\sigma_{wd}$ bzw. $\sigma_w$ den nachstehenden Beziehungen genügen:

   $$\sigma_{wd} \approx \frac{D_{max}}{100} \cdot \frac{T_o}{1450} \cdot E_d,$$

   $$\sigma_w \approx K_{zul.} \cdot E_d,$$

   wobei $E_d$ den dynamischen Elastizitätsmodul in N/mm$^2$, $D_{max}$ die maximale Ausdehnung eines zylindrischen Probekörpers beim Druckerweichungsversuch nach DIN 51053 Blatt 1 in Prozent, $T_o$ die Temperatur, bei der maximale Ausdehnung eines Probekörpers beim Druckerweichungsversuch auftritt, in °C und $K_{zul.}$ einen Zulässigkeitsfaktor bedeuten, wobei sich $K_{zul.}$ im Fall eines Drehrohrofens mit einem Radius von 2,25 m, einer Höhe des Formkörpers in Radiusrichtung ("Steinhöhe") von 250 mm und einer Ofenmantelovalität von 0,4 % zu $0,67 \cdot 10^{-3}$ errechnet.

2. Verfahren nach Anspruch 1, dadurch gekennzeichnet, daß die Gemengepartikel in der Kornfraktion von 0,3 bis 4,0 mm vorliegen.

3. Verfahren nach Anspruch 2, dadurch gekennzeichnet, daß die Gemengepartikel in der Kornfraktion von 0,5 bis 2,0 mm vorliegen.

**4.** Verfahren nach einem der vorangehenden Ansprüche, dadurch gekennzeichnet, daß der Gehalt der Formkörpergesamtmischung an den Gemengepartikeln bis zu 15 Gew.-%, ausgedrückt in $ZrO_2$, beträgt.

**5.** Verfahren nach einem der vorangehenden Ansprüche, dadurch gekennzeichnet, daß die Gemengepartikel wenigstens einen Calciumzirkonatbildner als Metalloxid, Metallhydroxid, Metallcarbonat und/oder Metallsalz aufweisen, der/die während des Brennprozesses Calciumzirkonat bildet/bilden.

**6.** Verwendung des grobkeramischen Formkörpers nach einem der vorangehenden Ansprüche als Feuerfestmaterial, insbesondere zur Ausmauerung von Drehrohröfen.

## Claims

**1.** A method of producing a coarse ceramic refractory moulding, more particularly for lining rotary kilns, on the basis of magnesia, wherein the total mixture (batch) used for producing the moulding contains particles having a grain size > 0.3 mm and containing calcium zirconate forming substances in an equimolar ratio of CaO to $ZrO_2$, characterised in that the individual particles, after the components of the mixture have been mixed in stoichiometric proportions, are moulded and the total mixture used for producing the moulding is added before the firing process, in the form of a mixture of particles in an unreacted state; the content of mixture particles, relative to the total mixture for forming the mouldings, is from 5 to 25 wt.% and the total mixture for forming the mouldings is adjusted so that the stress sensitivity index SEI, calculated from the equation

$$SEI = \sigma_{wd} + \sigma_w - KDF$$

$\leq 550$ N/mm$^2$, wherein $\sigma_{wd}$ is the thermal expansion stress in N/mm$^2$, $\sigma_w$ is the permissible ovality stress in N/mm$^2$, KDF is the cold compressive strength of the moulding expressed in N/mm$^2$ and $\sigma_{wd}$ and $\sigma_w$ satisfy the following relations:

$$\sigma_{wd} \approx \frac{D_{max}}{100} \; \frac{T_o}{1450} \cdot E_d,$$

$$\sigma_w \approx K_{zul.} \cdot E_d,$$

where $E_d$ is the dynamic elasticity modulus in N/mm$^2$, $D_{max}$ is the maximum elongation of a cylindrical testpiece in the load test to DIN 51053 Sheet 1, expressed as a percentage, $T_o$ is the temperature at which the maximum elongation of a testpiece in the load test occurs, expressed in °C, and $K_{zul.}$ is a permissibility factor, where $K_{zul.}$ has a calculated value of $0.67 \times 10^{-3}$ in the case of a rotary kiln having a radius of 2.25 m, a height of the moulding in the radial direction ("brick height") of 250 mm and a shell ovality of 0.4%.

**2.** A method according to claim 1, characterised in that the mixture particles have a grain size from 0.3 to 4.0 mm.

**3.** A method according to claim 2, characterised in that the mixture particles have a grain size of 0.5 to 2.0 mm.

**4.** A method according to any of the preceding claims, characterised in that the content of particles in the total mixture for forming the mouldings is up to 15 wt.%, expressed in $ZrO_2$.

**5.** A method according to any of the preceding claims, characterised in that the mixture particles form at least one calcium zirconate forming substance in the form of a metal oxide, metal hydroxide, metal carbonate and/or metal salt which forms calcium zirconate during the firing process.

**6.** Use of the coarse ceramic moulding according to any of the preceding claims as a refractory material, particularly for the lining of rotary kilns.

**Revendications**

1. Procédé pour fabriquer des corps formés en céramique grossière réfractaire, en particulier pour réaliser des revêtements de fours cylindriques rotatifs, laquelle céramique est à base de magnésie, où le mélange global pour former les corps (pâte) utilisé pour fabriquer des corps formés contient une fraction de particules ayant une granulométrie > 0,3 mm et constituées de substances susceptibles de former du zirconate de calcium, dans un rapport molaire de CaO sur $ZrO_2$ de 1, caractérisé en ce que les particules individuelles après mélange des composants forment un mélange stoechiométrique qui est ajouté avant le processus de calcination sous la forme de particules mixtes en un état où elles n'ont pas réagi, au mélange global pour former des corps ;

> la teneur en particules mixtes, calculée sur la base du mélange global pour former des corps, est de 5 à 25 % en poids ; et que
> le mélange global pour former des corps ainsi réalisé permet d'avoir un indice de sensibilité aux contraintes SEI tel que SEI $\leq$ 550 N / mm$^2$, SEI étant donné par la formule :

$$SEI = \sigma_{wd} + \sigma_w - KDF$$

> dans laquelle formule $\sigma_{wd}$ est la contrainte de dilatation thermique en N/mm$^2$, $\sigma_w$ est la contrainte d'ovalité permise en N/mm$^2$ et KDF est la résistance à la pression à froid du corps formé en N / mm$^2$, $\sigma_{wd}$ et $\sigma_w$ sont données par les relations suivantes :

$$\sigma_{wd} \approx (D_{max}/100) \times (T_o . E_d / 1450)$$

$$\sigma \approx K_{zul} . E_d$$

> où $E_d$ est le module d'élasticité dynamique en N /mm$^2$, $D_{max}$ est la dilatation maximale d'une éprouvette cylindrique dans un essai de ramollissement sous pression selon DIN 51053 feuille 1, en pour-cent, $T_o$ est la température à la dilatation maximale de l'éprouvette dans l'essai de ramollissement sous pression en °C et $K_{zul}$ est un facteur d'acceptabilité qui est de 0,67.10$^{-3}$ dans le cas d'un four cylindrique rotatif ayant un rayon de 2,25 m, une hauteur de corps formés dans la direction radiale (« hauteur de la pierre ») de 250 mm et une ovalité du revêtement du four de 0,4 %.

2. Procédé selon la revendication 1, caractérisé en ce que les particules mixtes ont une granulométrie dans la plage de 0,3 à 4,0 mm.

3. Procédé selon la revendication 2, caractérisé en ce que les particules mixtes ont une granulométrie de 0,5 à 2,0 mm.

4. Procédé selon l'une quelconque des revendications précédentes, caractérisé en ce que la teneur en particules mixtes dans le mélange global pour former des corps va jusqu'à 15 % en poids, le pourcentage étant exprimé en $ZrO_2$.

5. Procédé selon l'une des revendications précédentes, caractérisé en ce que les particules ajoutées contiennent au moins un composé susceptible de former du zirconate de calcium sous la forme d'un oxyde métallique, d'un hydroxyde métallique, d'un carbonate métallique et / ou d'un sel métallique, qui forme ou forment du zirconate de calcium par calcination.

6. Utilisation de corps formés en céramique grossière selon l'une des revendications précédentes comme matériau réfractaire, en particulier pour constituer un revêtement dans un four rotatif cylindrique.

## Spannungsempfindlichkeitsindex als Funktion des CaZrO3-Zusatzes in Form eines Klinkers bzw. als Gemenge

Legend:
— □ — . Gemengepartikel gem. Erfindung
- □ - . Klinker (gebrannt bei 1750 °C) gem. US-PS 48 49 383

Y-axis: Spannungsempfindlichkeitsindex N/mm²
X-axis: Zusatzmenge an CaZrO3 Gew-%